# EUROPEAN PATENT SPECIFICATION

(11) **EP 3 645 203 B1**
(45) Date of publication and mention of the grant of the patent: **15.11.2023**
(21) Application number: 18740360.5
(22) Date of filing: 27.06.2018
(51) Int. Cl.: B23K 9/20

(54) **WELD PIN, STACK OF SUCH WELD PINS, MAGAZINE FOR SUCH STACK, PICKUP MECHANISM FOR FEEDING OF SUCH WELD PINS, SYSTEM FOR WELDING, AND METHOD FOR FEEDING OF WELD PINS**
SCHWEISSBOLZEN, STAPEL VON SCHWEISSBOLZEN, MAGAZINE FÜR EINEN SOLCHEN STAPEL, AUFNAHMEMECHANISMUS ZUM ZUFÜHREN VON SOLCHEN SCHWEISSBOLZEN, SYSTEM ZUM SCHWEISSEN UND VERFAHREN ZUM ZUFÜHREN VON SCHWEISSBOLZEN
GOUJON DE SOUDAGE, EMPILEMENT DE TELS GOUJONS DE SOUDAGE, MAGASIN POUR UN TEL EMPILEMENT, MECANISME DE PRÉHENSION POUR L'ALIMENTATION DE TELS GOUJONS DE SOUDAGE, SYSTÈME DE SOUDAGE ET PROCÉDÉ D'ALIMENTATION DE GOUJONS DE SOUDAGE

(30) Priority: 30.06.2017 SE 1750863
(43) Date of publication of application: 06.05.2020
(73) Proprietor: BM Svets AB, 418 31 Göteborg (SE)
(72) Inventor: NYSTRÖM, Mattias, 437 92 Lindome (SE); WARME, Jan, 429 32 Kullavik (SE); BLOMBERG, Christer, 423 34 Torslanda (SE); BLOMBERG, Henric, 417 44 Göteborg (SE); GUSTAFSSON, Tomas, 463 32 Lilla Edet (SE)
(74) Representative: Bergenstråhle & Partners AB
(86) International application number: PCT/SE2018/050696
(87) International publication number: WO 2019/004915

(56) References cited:
- US-A- 3 312 810
- US-A- 4 121 715
- US-A- 4 163 888
- US-A- 5 824 987
- US-A- 6 010 291
- US-A1- 2007 212 197

## Description

### TECHNICAL FIELD

The present disclosure relates to a weld pin, a stack of such weld pins, a magazine for such stack of weld pins, a pick-up mechanism for feeding of weld pins to a welding electrode of a welding gun, a system for welding with such stack of weld pins, such magazine and such pick-up mechanism, and a method for feeding of weld pins, see claims 1, 3, 5, 6, 11 and 12.

### BACKGROUND

Weld pins are commonly used for attaching an insulation material or similar structure to a construction surface made of metal, such as for example ventilation ducts or other steel structures of buildings, ships or off-shore constructions. The insulation material can for example be a liner for heat or fire insulation. The weld pin is designed with a nail part having a nail tip that is stud welded to the construction surface. Traditionally, when welding the weld pins to the construction surface, the weld pins are fed manually from a stock of weld pins to a welding electrode of a welding gun. The stock of weld pins may for example be a weld pin cartridge, box or pocket, where the weld pins are stored. At the welding electrode of the welding gun, the weld pin is held in position by a magnet. The manual feeding of the weld pins to the welding gun makes the work time consuming and inconvenient for the operator of the welding gun.

In US 5,824,987 (basis for the preamble of claims 1, 3, 5, 6, 11 and 12) weld pin feeder and a magazine is disclosed, where the magazine is provided essentially parallel to the welding axis, and a lever with a permanent magnet picks up the weld pins from the magazine and guide them to the welding electrode. One problem with his solution is that the construction is not ergonomically adapted to the operator. The solution described in US 5,824,987 may be complicated to use when welding in corners of a construction structure or when welding in small or tight spaces, such as close to pipes or other construction elements. Further, the feeding of weld pins is not precise enough to secure an efficient feeding of the weld pins to the welding gun.

There is thus a need to make the handling of welding guns faster and more convenient to the operator, through a more efficient and precise feeding of the weld pins, which welding gun is ergonomic to use and adapted for being used in tight spaces.

### SUMMARY OF THE DISCLOSURE

A weld pin, a stack of such weld pins, a magazine for such stack of weld pins, a pick-up mechanism for feeding of weld pins to a welding electrode of a welding gun, a system for welding with such stack of weld pins, such magazine and such pick-up mechanism, and a method for feeding of weld pins according to the present invention are defined in claims 1, 3, 5, 6, 11, and 12 respectively. Further embodiments of the invention are defined in the dependent claims.

The present invention concerns a pickup mechanism for feeding of weld pins from a magazine to a welding electrode of a welding gun as defined in claim 6, where the pickup mechanism is attachable to the welding gun in connection to the welding electrode, and where the magazine is attachable to the pickup mechanism. The pickup mechanism comprises a movable pickup lever arm displaceable between a pickup position and a delivery position, where the pickup lever arm is adapted for displacing the weld pin from a pickup position in the magazine to a welding position at the welding electrode. The pickup lever arm has a pickup part comprising a feeding portion for feeding the weld pins from the pickup position to the welding position. The pickup part comprises a retrieving portion arranged with a sliding surface for displacing the pickup lever arm in a direction essentially perpendicular to the direction of the movement between the delivery position and the pickup position when the sliding surface is in contact with a first weld pin in the magazine, and when the pickup lever arm moves between the delivery position and the pickup position to pick up the first weld pin. The pickup part is configured such that the sliding surface bridges the first weld pin to the feeding portion at a predetermined position of the pickup lever arm, and such that the first weld pin engages the feeding portion in the pickup position.

Advantages with these features are that the handling of the welding gun is faster and more convenient to the operator through a more efficient and precise feeding of the weld pins. The welding gun will also be more ergonomic to use and adapted for being used with one hand only with a pickup mechanism that is having a compact construction with a feeding portion arranged for feeding the weld pins from the magazine to the welding electrode.

According to an aspect of the present invention, the pickup lever arm is displaced from the pickup position to the delivery position when the pickup lever arm is tilted in a first rotational direction around a first rotational axis. The pickup lever arm is displaced from the delivery position to the pickup position when the pickup lever arm is tilted in a second rotational direction around the first rotational axis. The second rotational direction is opposite the first rotational direction. These features provide an efficient and secure feeding of the weld pins from the magazine to the welding electrode that is fast and simple.

According to another aspect of the present invention, the feeding portion has an arc-formed concave shape, which when the pickup part is arranged in the pickup position is adapted to engage the first weld pin such that the first weld pin can be lifted by the feeding portion from the pickup position to the welding position. The shape of the feeding portion secures that the weld pins are fed from the magazine to the welding electrode in an efficient and reliable manner.

According to a further aspect, the retrieving portion is arranged in connection to the feeding portion and is adapted to guide the pickup lever arm past the first weld pin. The retrieving portion will secure that the pickup lever arm is displaced from the delivery position and pass the first weld pin in the magazine to the pickup position, so that the feeding portion can engage the next weld pin in the magazine.

According to another aspect, the pickup position is arranged at an interface between the pickup mechanism and the magazine. With this arrangement, the weld pins can be easily picked up from the magazine by the pickup lever arm.

According to another aspect of the present invention, the pickup mechanism further comprises a trigger lever arm, which can be tilted between a start position and an end position. The trigger lever arm is interconnected with the pickup lever arm such that the trigger lever arm is displacing the pickup lever arm from the pickup position to the delivery position when the trigger lever arm is tilted from its start position to its end position, which provides an efficient and ergonomic handling of the welding gun.

According to another aspect of the present invention, the pickup mechanism further comprises a fixed housing part and a movable housing part, where the fixed housing part is adapted to be attached to a cylinder of the welding gun and where the movable housing part is interconnected with the trigger lever arm such that the movable hosing part is displaced along a cylinder axis of the cylinder when the trigger lever arm is tilted from its start position to its end position. Through the movable housing part, the feeding of the weld pins can be made precise to secure an efficient feeding of the weld pins to the welding electrode.

The present invention further concerns a system for welding, as defined in claim 11, where the system comprises weld pins, a welding gun, a magazine, and a pickup mechanism as described above. The pickup mechanism is adapted for feeding the weld pins arranged in a stack of weld pins in the magazine from a pickup position in the magazine to a welding position at a welding electrode of the welding gun. These features of the welding system will make the handling of the welding gun faster and more convenient to the operator through a more efficient and precise feeding of the weld pins.

According to an aspect, the magazine comprises a weld pin track for receiving the stack of weld pins and a force feeding device adapted to exercise a feeding force on the stack of weld pins. The force feeding device will in an efficient way push the weld pins in the weld pin track to a position where they can be picked up by the pickup lever arm.

According to another aspect, the force feeding device comprises a spring, a pulley, and a pushing sleigh, wherein the pushing sleigh interacts with the spring over the pulley such that the pushing sleigh pushes the stack of weld pins towards a weld pin pickup opening of the magazine. This provides a simple and reliable construction with few parts involved.

According to a further aspect of the present invention as defined in claim 1, the weld pin comprises a nail part attached to a sheet part, such that the weld pins have a flat side and a nail side. The sheet part comprises two essentially parallel guiding edges and a notch extending from a side edge of the sheet part in a direction towards the nail part, wherein the two guiding edges are arranged essentially parallel with the notch. The nail part is provided essentially in the centre of the sheet part and the notch stretches from a side edge and close to the centre of the sheet part, but normally not all the way in to the nail part. The notch and the parallel edges allow a stacking of the weld pins and smooth transportation of a stack of weld pins in a magazine with parallel walls.

According to another aspect of the disclosure, the width of the notch is smaller than the double diameter of the nail part. A narrower notch assures a straighter stacking of the weld pins due to less play between the edges of the notch and the nail part of the weld pin provided in the notch. It is therefore suggested that the width of the notch is at least slightly wider than the diameter of the nail part, and thus so wide that the nail part fits into the notch, and narrower than the double diameter of the nail part. Additional guiding means can thereby be avoided.

According to another aspect of the present invention as defined in claim 3, the weld pins are arranged in the stack of weld pins such that a nail part of a preceding weld pin extends through the notch of at least one succeeding weld pin in the stack of weld pins, and wherein a holding arrangement at least connects a first weld pin with a last weld pin in the stack of weld pins. This arrangement will realise a compact stack of weld pins.

According to a further aspect of the present invention, the holding arrangement comprises a strip extending from the first weld pin to the last weld pin, or an adhesive connecting each of the weld pins in the stack with the neighbouring weld pin, or a track in which the stack of weld pins is inserted. Since the preceding weld pins nail extends through the notch of the succeeding weld pin, the weld pins is secured against rotational movements in the plane of the sheet part. Due to the holding arrangement connecting the weld pins, the stack of weld pins also becomes secured in an outwards direction of the notch.

The present invention further concerns a method for feeding of weld pins with a pickup mechanism from a magazine to a welding electrode of a welding gun as defined in claim 12, where the pickup mechanism is attachable to the welding gun in connection to the welding electrode. The magazine is attachable to the pickup mechanism, wherein the pickup mechanism comprises a movable pickup lever arm displaceable between a pickup position and a delivery position. The method comprises the steps: displacing the weld pin from a pickup position in the magazine to a welding position at the welding electrode with the pickup lever arm, where the pickup lever arm has a pickup part comprising a feeding portion for feeding the weld pins from the pickup position to the welding position, and where the pickup part comprises a retrieving portion arranged with a sliding surface; displacing the pickup lever arm with the sliding surface in a direction essentially perpendicular to the direction of the movement between the delivery position and the pickup position when the sliding surface is in contact with a first weld pin in the magazine when the pickup lever arm moves between the delivery position and the pickup position to pick up the first weld pin, where the pickup part is configured such that the sliding surface bridges the first weld pin to the feeding portion at a predetermined position of the pickup lever arm such that the first weld pin engages the feeding portion in the pickup position.

### BRIEF DESCRIPTION OF DRAWINGS

The disclosure will be described in greater detail in the following, with reference to the attached drawings, in which
- Fig. 1a-c: show schematically, different embodiments of a weld pin according to the disclosure,
- Fig. 2a-d: show schematically, different embodiments of a stack of weld pins according the disclosure,
- Fig. 3: shows schematically, an embodiment of a welding system according to the disclosure,
- Fig. 4a-b: show schematically, a welding system with a pickup mechanism in a pickup position according to the disclosure,
- Fig. 5a-b: show schematically, a welding system with a pickup mechanism in a position between a pickup position and a delivery position according to the disclosure,
- Fig. 6a-b: show schematically, a welding system with a pickup mechanism in a delivery position according to the disclosure,
- Fig. 7a-b: show schematically, a welding system with a pickup mechanism in a pickup position and a weld pin in a welding position according to the disclosure,
- Fig. 8: shows schematically, an embodiment of a pickup lever arm according to the disclosure,
- Fig. 9: shows schematically, an embodiment of a welding system with a weld pin magazine according to the disclosure,
- Fig. 10: shows schematically, in a perspective view an embodiment of a welding system according to the disclosure.
- Fig. 11: shows schematically, another embodiment of a welding system with a pickup mechanism in a pickup position according to the disclosure,
- Fig. 12: shows schematically, another embodiment of a welding system with a pickup mechanism in a delivery position according to the disclosure, and
- Fig. 13: shows schematically, another embodiment of a weld pin magazine according to the disclosure.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

All drawings are schematic. In the figures, relevant x-, y- and z-directions are indicated. Spatial references as upwards and downwards, above and below refers to how the features are positioned in the respective figures in relation to the respective coordinate system. Upwards is always in the positive y-direction and downwards is always in the negative y-direction, whereby above is always further away in the positive y-direction and below is further away in the negative y-direction in relation to the position referred to.

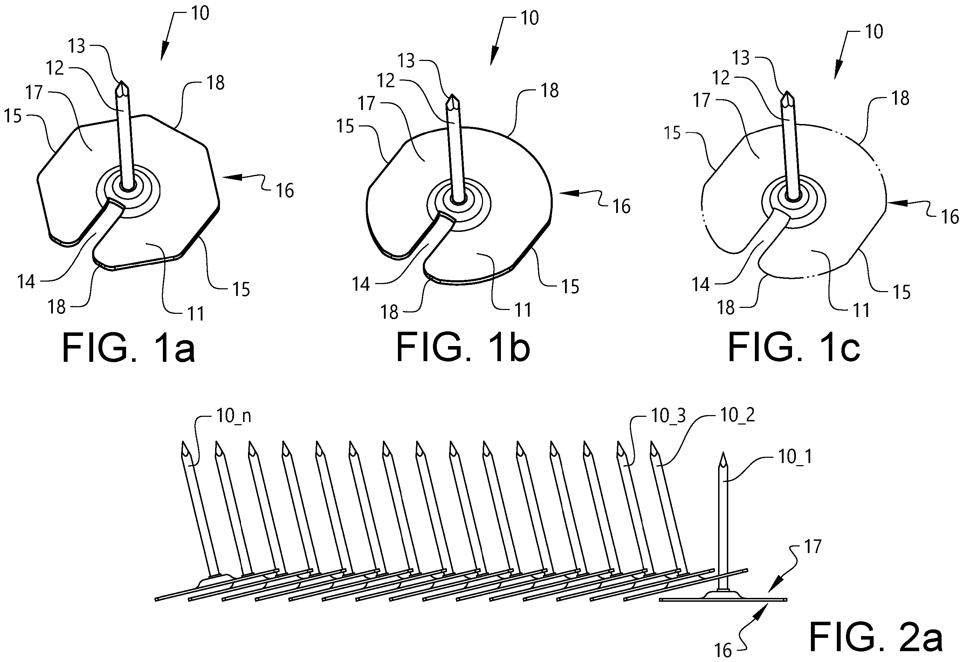

Figures 1a-c schematically show different embodiments of a weld pin according to the disclosure. The weld pin 10 comprises a sheet part 11 and a nail part 12 attached to the sheet part 11. The weld pin 10 may be constructed so that the nail part 12 is extending through or piercing the sheet part 11 essentially in the middle portion of the sheet part 11. When the nail part 12 is attached to the sheet part 11, the weld pin 10 has a flat side 16 and a nail side 17, whereby a tip 13 of the nail part 12 is arranged on the nail side 17. The nail part 12 is attached to the sheet part 11 so that a nail head that may be arranged on the nail part 12 opposite the tip 13 is flush with the flat side 16 of the weld pin 10.

The nail part 12 is for example made of a homogeneous steel material. Other suitable materials for the nail part may be any material than can be welded. The sheet part 11 may for example be made of a sheet material, normally a durable and relatively inexpensive material such as a metal. Steel may be a suitable metal, and other materials, for example polymeric, paper or sandwich materials are also possible. The specification of the durability of the material of the sheet part can be different for different applications, whereby an application with shorter lifecycle might allow a lower grade material. The sheet material could also be made of a mesh material in order to reduce the amount material used and to save weight and material costs.

The sheet part 11 is provided with two guiding edges 15 and a notch 14, whereby the notch 14 extends in a direction essentially parallel with the two guiding edges 15, which also are arranged essentially parallel with each other. The notch 14 is in the embodiments shown in figures 1a-c arranged in the middle between the two guiding edges 15. The width of the notch 14 may be chosen so that it is smaller than the double diameter of the nail part 12.

The two guiding edges 15 of the sheet part 11 are connected with two side edges 18, whereby the notch 14 is extending from one of the side edges 18. The two side edges 18 can be formed as continuous edges as shown in figure 1b or be divided into edge segments as shown in figure 1a. The shape and form of the two edges 18 is of subordinate significance, which is illustrated in figure 1c, where the two edges 18 have been marked with dashed lines. The guiding edges 15 are adapted to interact with a track in a magazine 200 or a holding arrangement 110 for the weld pins 10, in order to keep a stack of weld pins 100 together in straight alignment during feeding of the stack of weld pins into the magazine 200.

Figure 1a shows an embodiment of the weld pin 10 where each of the side edges 18 has been divided in to three equally long segments. The guiding edges 15 may also be designed so that they have the same length as the segments of the side edges 18, whereby the sheet part 11 has a symmetrical octagon-like shape, and where the notch 14 is extending from the middle segment of one of the side edges 18 of the octagon-like shaped sheet part 11. As an alternative, the length of the guiding edges 15 may differ from the length of the segments of the side edges 18. Further, the segments of the side edges 18 may have different lengths if desired.

Figure 1b shows an embodiment of the weld pin 10, which differs from the weld pin in figure 1a in that the two side edges 18 are having a continuous circular-like or arc-like shape. The shape of the two side edges 18 may be any broken or continuous shape as long as the guiding edges 15 fulfil the requirements of being essentially parallel and essentially parallel with the notch 14, which is arranged essentially in the middle between the guiding edges 15. The flexibility in the form of the side edges 18 is illustrated in figure 1c, where the side edge 18 is indicated with dashed lines.

Figure 2a illustrates the stack of weld pins 100, where a number of weld pins 10 (10_1, 10_2 ... 10_n) are arranged in a row to form the stack of weld pins 100. All weld pins 10 of the stack 100 are arranged with their nail part 12 oriented in the same direction. The stack 100 is formed so that the second weld pin 10_2 of the stack 100 is placed with its notch 14 surrounding the nail part 12 of the first weld pin 10_1 in the stack 100. As described above, the width of the notch 14 may be arranged so that it is smaller than the double diameter of the nail part 13, and in this way the weld pins 10 may be easily stacked upon each other. The weld pins 10 are thus arranged in the stack of weld pins 100 such that the nail part 13 of a preceding weld pin 10 extends through the notch 14 of at least one succeeding weld pin 10 in the stack of weld pins 100. The sheet part 11 of second weld pin 10_2 is thereby arranged above the sheet part 11 of the first weld pin 10_1 in the stack 100. The sheet part 11 of the third weld pin 10_3 is placed with its notch 14 surrounding the nail part 12 of the second weld pin 10_2 in the stack 100. The sheet part 11 of third weld pin 10_3 is thereby arranged upon the sheet part 11 of the second weld pin 10_2 in the stack 100. The succeeding weld pins 10_4 - 10_n are arranged correspondingly in relation to each other in the stack 100.

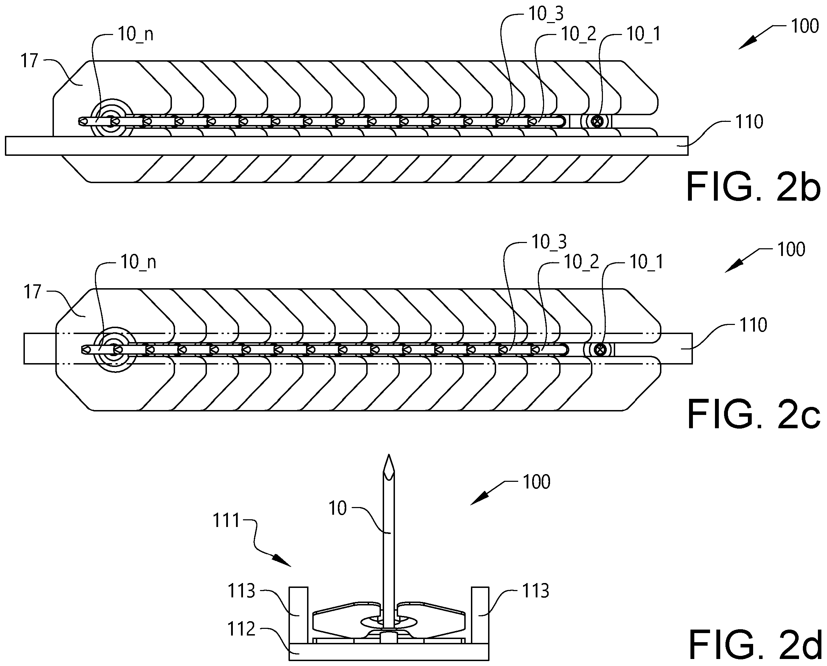

In figures 2b and 2c, the stack of weld pins 100 further comprises the holding arrangement 110 for holding the stack 100. The holding arrangement 110 secures that the weld pins are not becoming loose from the stack 100, when handling the stack of weld pins. In the embodiments shown in figures 2b-c, the holding arrangement 110 may be formed of a strip made of a suitable material. In the embodiment shown in figure 2b, the strip forming the holding arrangement 110 extends on the nail side 17 of the weld pins 10. In the embodiment shown in figure 2c the strip forming the holding arrangement 110 extends on the flat side 16 of the weld pins 10. The strip is attached to or connects at the least the first weld pin 10_1 and the last weld pin 10_n in the stack 100. For keeping the stack together in the stacking direction it is sufficient that the strip is attached only to the first weld pin 10_1 and the last weld pin 10_n in the stack. By providing the strip over and/or under the sheet part 11, the stack of weld pins 100 is supported in the direction of the holding arrangement 110. The strip or string can be rigid in order to better hold the stack in a straight line, horizontally and vertically.

In an alternative embodiment, the strip may be attached to more than two weld pins 10 in the stack 100, such as for example every second weld pin 10 in the stack 100 or even all weld pins 10 in the stack 100.

Independently of how many weld pins 10 the strip is attached to, the strip can be arranged on the nail side 17 of the weld pins 10 or on the flat side 16 of the weld pins 10. When the strip is arranged on the nail side 17, the strip can be arranged on either side of the nails parts 12, as indicated in figure 2b where the strip is arranged on one side of the nail parts 12, or as an alternative double sided on both sides of the nail parts 12 of the weld pins, and be attached to the nail parts 12 and/or the sheet parts 11. Two or more strips may also be used if desired.

The strip may be designed so that it is rigid enough to carry the weight of the stack 100 without collapsing. Suitable materials for the holding arrangement 110 may for example be a strip of plastic material, or a strip made of paper polymer, textile, metal or glue like material. Other suitable materials are also possible to use. The holding arrangement 110 may be attached to the stack of weld pins 100 with suitable glues or other adhesive materials, which may be integrated in the strip. In this way the strip may be designed to connect the first and last weld pin, more than two weld pins, every second weld pin or for example all weld pins in the stack.

In figure 2d an alternative embodiment of the holding arrangement 110 is shown, where the holding arrangement 110 is formed as an elongated track 111 made of a suitable material. The elongated track 111 is formed with a u-shaped cross-sectional shape, with a bottom wall 112 and two side walls 113. The distance between the side walls 113 corresponds to the distance between the guiding edges 15 of a weld pin 10, such that when the weld pin 10 is arranged with its flat side 16 on the bottom of the track 111, the guiding edges 15 are arranged essentially parallel with the side walls 113 of the track 111. The sheet part 11 may be held in the track 111 by frictional forces between the guiding edges 15 and the side walls 113. As an alternative, one or both of the side walls 113 may be provided with an elongated longitudinal groove or similar arrangement, which is arranged to receive the guiding edges 15 of the sheet parts 11 of the weld pins 10. The distance between the side walls 113 can then be made narrower than the distance between the two essentially parallel guiding edges 15 of the weld pins 10, whereby at least one of the side walls 113 is provided with the elongated groove or similar arrangement, extending essentially parallel with the bottom wall 112 of the track 111. If the track 111 is arranged with one elongated groove, one of the guiding edges 15 of the weld pins are guided by the groove and the other guiding edge is arranged in connection to the opposite side wall 113 of the track 111. If both side walls are arranged with elongated grooves, both guiding edges 15 of the weld pins 10 are guided by the elongated grooves.

The track 111 may be adapted to be inserted into the magazine 200, whereby the magazine 200 is arranged for feeding the weld pins 10 arranged in the track 111 when the welding gun is operated. The holding arrangement 110 in this embodiment thus comprises the track 111 in which the stack of weld pins 100 is inserted. The track 111 can be provided with a release mechanism at each of its ends, enabling a securing and releasing of the weld pins in the stack of weld pins.

The purpose of the holding arrangement 110, independently of how it is formed, is as described above to keep the stack 100 together so that it does not fall apart to individual weld pins 10 during handling and transportation of the stack 100. The holding arrangements 110 may further facilitate easy insertion of a stack 100 into the magazine 200.

As an alternative, the holding arrangement 110 may be made of an adhesive material connecting each of the weld pins 10 in the stack 100 with the neighbouring weld pin 10.

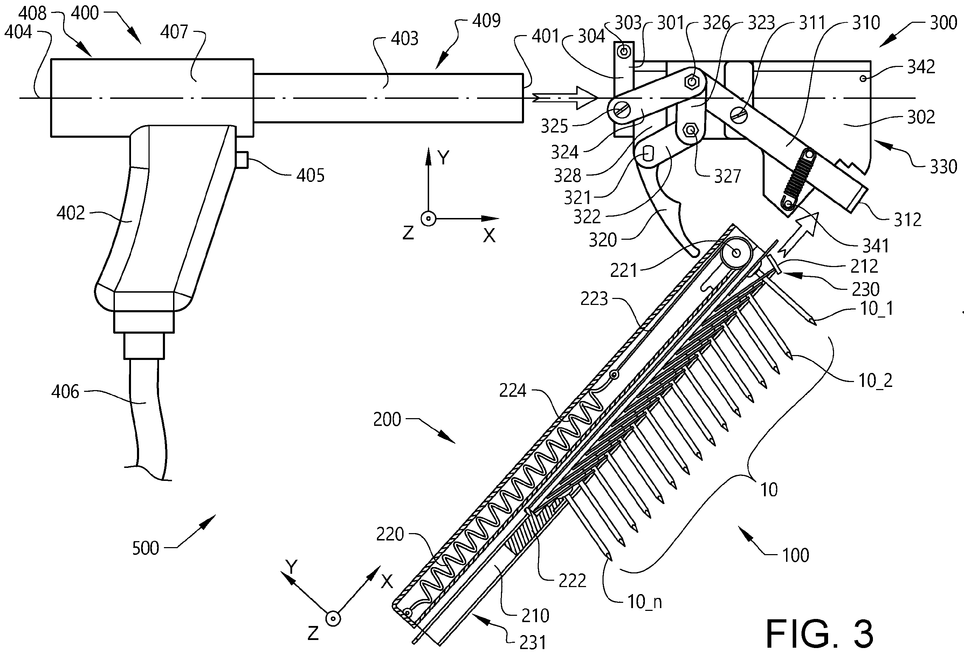

In figure 3, a welding system 500 is disclosed in an exploded view, where the welding system 500 comprises a stud welding gun 400, a pickup mechanism 300, and the magazine 200 provided with a stack of weld pins 100. Each of the components of the welding system will be further described below. The pickup mechanism 300 is adapted for individually feeding the weld pins 10 arranged in the stack of weld pins 100 in the magazine 200 from a pickup position in the magazine 200 to a welding position at a welding electrode 401 of the welding gun 400.

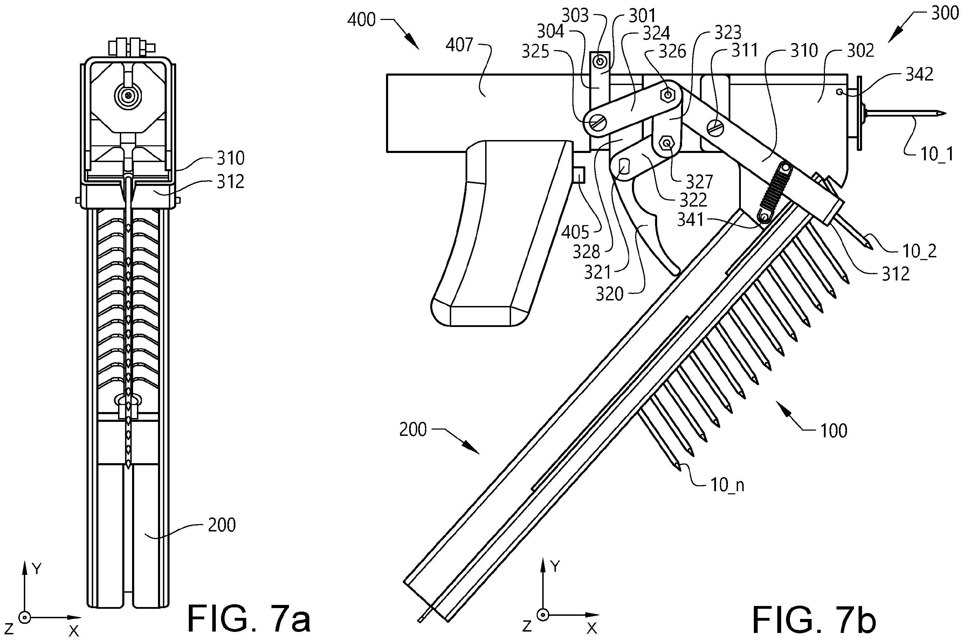

The stud welding gun 400 may be of any conventional type, such as for example a standard welding gun for welding of studs and/or weld pins. The stud welding gun 400 comprises a housing 407 provided with a handle 402 and a cylinder 403. The stud welding gun has a rear part 408, where the handle 402 is provided, and a front part 409, where the outer part of the cylinder 403 is arranged, as shown in figure 3. The cylinder 403 has a rotational axis 404, which also defines a welding axis, when the nail part 12 of the weld pin 10 is arranged essentially coaxially with the cylinder axis 404. An electric power supply cable 406 is provided at the end of the handle 402 for supplying power to the stud welding gun 400. Inside the housing 407, the stud welding gun 400 is equipped with components required for supplying power to the welding electrode 401, which is arranged at the tip or front end of the cylinder 403. At the tip of the cylinder 403, one or more permanent magnets are also arranged, which permanent magnets can hold weld pins 10 when placed thereon. In this way, the weld pins can be attached to the tip of the cylinder 403 with the magnetic force generated by the permanent magnet, as shown in figure 7b. The cylinder 403 has normally a circular cross-sectional shape. However, the cylinder 403 may have other cross-sectional shapes, such as for example elliptical, quadratic, or hexagonal. A welding trigger 405 is arranged on the front side of the handle 402. By actuating the welding trigger 405, a welding cycle is initiated. In a normal handling of the stud welding gun 400, the welding trigger 405 is actuated by an index finger of an operator's hand holding the stud welding gun 400. The welding gun 400 may also be custom made instead of using a standard welding gun existing on the open market. By making a custom made welding gun it is possible to use electromagnets instead of permanent magnets.

The pickup mechanism 300 is as shown in figures 3, 4b, 5b and 6b provided with a fixed housing part 301 and a movable housing part 302. The pickup mechanism 300, with the fixed housing part 301 and the movable housing part 302, is adapted to being attached to the cylinder 403 of the welding gun 400 in connection to the welding electrode 401, where the fixed housing part 301 is provided to be securely attached to the cylinder 403 with suitable fixation means. In the embodiment shown, the fixed housing part 301 is attached to the cylinder 403 through an attachment screw 303, which tightens a clamp ring 304 arranged on the pickup mechanism 300 around the cylinder 403.

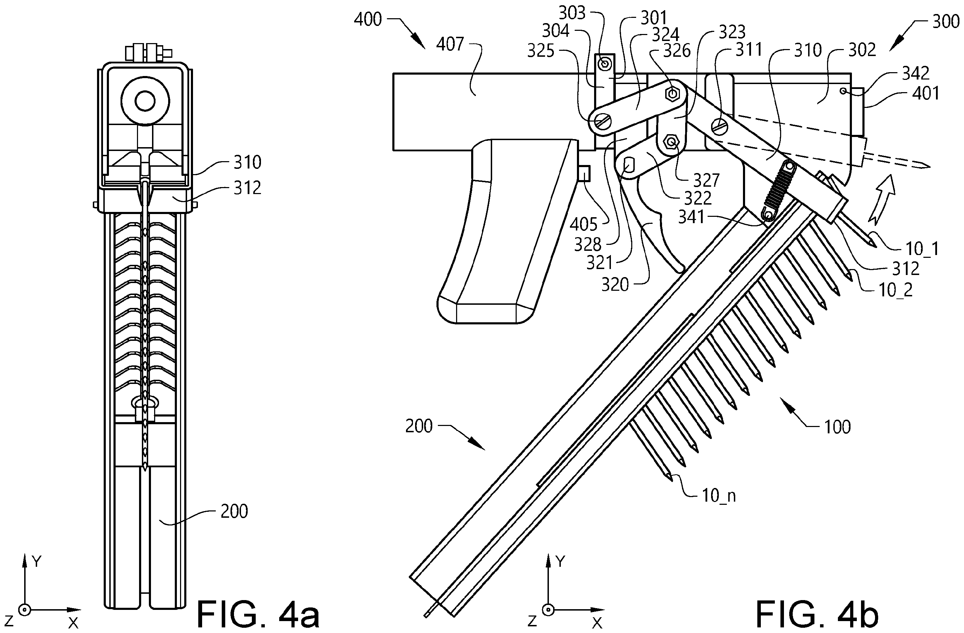

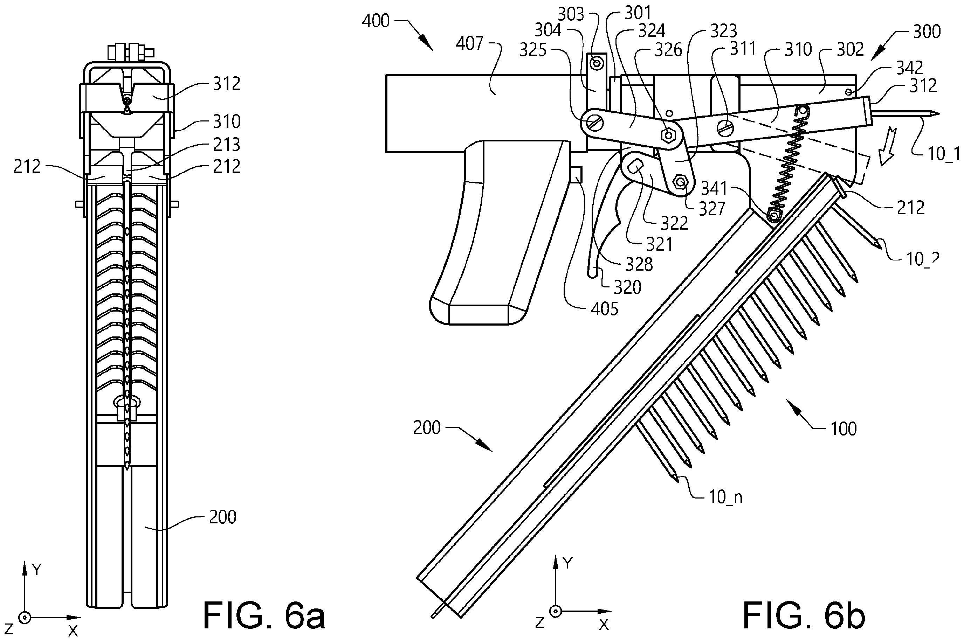

The pickup mechanism 300 is provided with a trigger lever arm 320, which can be tilted between a start position, as shown in figure 4b, and an end position, as shown in figure 6b. In the embodiments shown in the figures, the trigger lever arm 320 is arranged so that it can be manually actuated or tilted by the operator's finger. However, it may as an alternative also be possible to design the pickup mechanism 300 so that it is not manually operated, but instead electrically or pneumatically operated. The trigger lever arm 320 is interconnected with a pickup lever arm 310 such that the trigger lever arm 320 is displacing the pickup lever arm 310 from a pickup position, as shown in figures 4a and 4b, to a delivery position, as shown in figures 6a and 6b. When the pickup lever arm 310 is in the pickup position, the pickup lever arm 310 is ready to pick up a first weld pin 10_1 from the magazine 200. The first weld pin 10_1 in the magazine 200, as shown in figure 4b, is in a pickup position ready to be fed from the magazine 200 to the welding electrode 401. When the pickup lever arm 310 is in the delivery position, the weld pin 10 can be delivered to the welding electrode 401 in a welding position. The welding position of the weld pin 10 is shown in figure 7b. The pickup lever arm 310 is thus displaceable between the pickup position and the delivery position, and is adapted for displacing the weld pin 10 from the pickup position in the magazine 200 to the welding position at the welding electrode 401. As shown in figure 4b, the pickup position is arranged at an interface between the pickup mechanism 300 and the magazine 200.

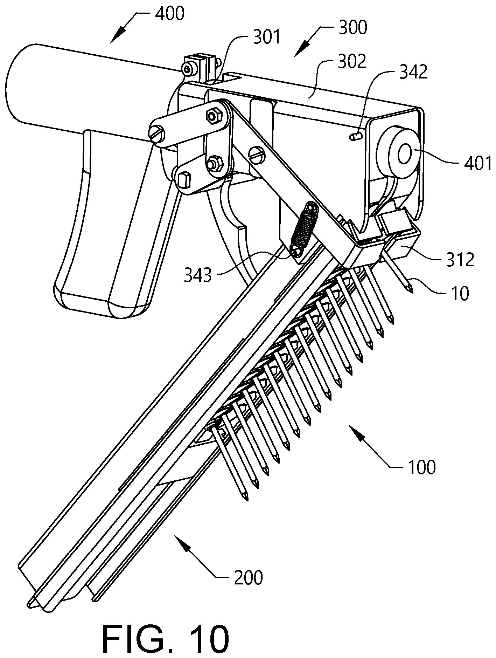

When the pickup mechanism 300 is attached to the welding gun it may be arranged in any angle in relation to the cylinder 403 of the welding gun 400. It is thus possible to rotate the pickup mechanism around the cylinder axis 404 of the cylinder 403, or arrange the pickup mechanism in any desired angle of rotation in relation to the cylinder axis 404, before tightening of the attachment screw 303. This possibility of positioning the pickup mechanism in relation to the cylinder may especially be useful when using the welding gun 400 with the pickup mechanism 300 in tight spaces, since a turning of the pickup mechanism 300 in relation to the welding gun 400 might facilitate an easier access to a welding point in the tight space. The embodiments shown in the figures will describe a pickup mechanism 300 arranged in alignment with the handle 402 of the welding gun 400, i.e. the trigger lever arm 320 will be arranged in a plane parallel with a plane of the handle 402 of the welding gun 400. In the figures, the trigger lever arm 320 will thus point downwards in the same direction as the handle 402, as shown in a perspective view in figure 10.

As shown in figures 4b and 6b, the movable housing part 302 is arranged in relation to the fixed housing part 301 so that it can slide in the axial direction of the cylinder 403 between an inner position, when the pickup lever arm 310 is in the pickup position, and an outer position, when the pickup lever arm 310 is in the delivery position. The movable housing part 302 may be constructed as a separate structure arranged on the outside of the fixed housing part 301. The movable housing part 302 is interconnected with the trigger lever arm 320 such that the movable hosing part 302 is displaced along the cylinder axis 404 of the cylinder 403 when the trigger lever arm 320 is tilted from its start position to its end position. In figure 4b the movable housing part 302 is in the inner position, and in figure 6b the movable housing part 302 is in the outer position.

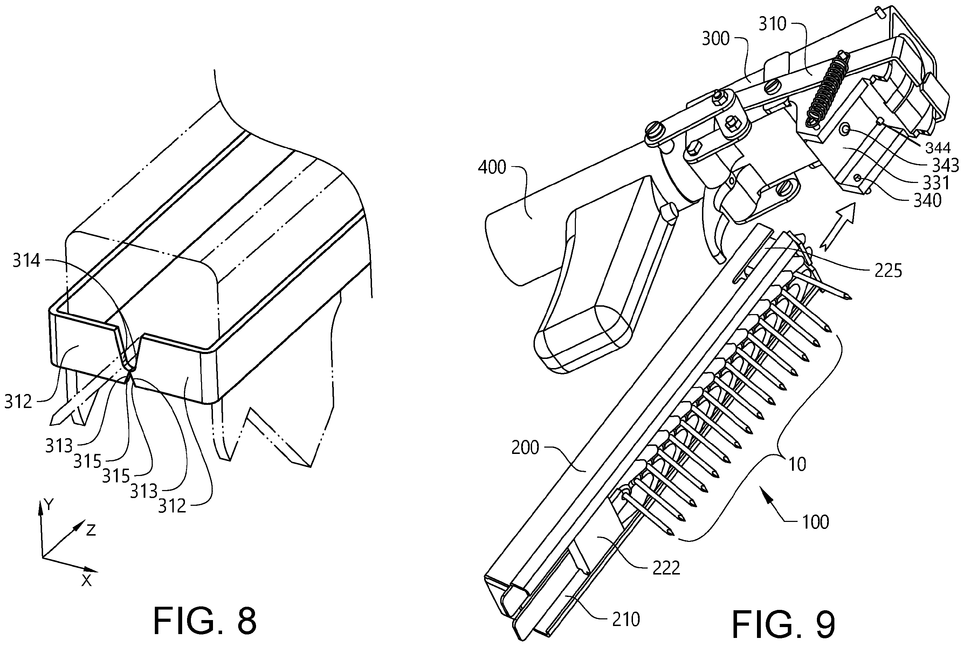

A number of interconnected lever arms, as shown more in detail in the figures, are connecting the fixed housing part 301 and the movable housing part 302. As indicated in figure 9, the interconnecting lever arms are symmetrically arranged on both sides of the pickup mechanism 300. A pickup lever arm 310 is connected to the movable housing part 302 at a first rotational axis 311, and arranged so that the pickup lever arm 310 can tilt around the first rotational axis 311. The pickup lever arm 310 is connected to the first rotational axis 311 in a position between its front end and rear end. A first lever arm 324 is connected to the fixed housing part 301 at its rear end so that it can rotate around a second rotational axis 325. The front end of the first lever arm 324 and the rear end of the pickup lever arm 310 are rotatably connected to a third rotational axis 326. In this way, the first lever arm 324 and the pickup lever arm 310 can rotate in relation to each other around the third rotational axis 326. When the movable housing part 302 is in its inner position, as shown in figure 4b, the first lever arm 324 is angled in a direction downwards from the third rotational axis 326 towards the second rotational axis 325, and the pickup lever arm 310 is angled in a direction downwards from the third rotational axis 326 towards the first rotational axis 311. In this position, corresponding to the pickup position, the rear end of the pickup lever arm 310 and the front end of the first lever arm 324 are located in a position, which is higher than the positions of the front end of the pickup lever arm 310 and the rear end of the first lever arm 324 respectively.

The trigger lever arm 320 is at its upper end attached to the movable housing part 301 at a fourth rotational axis 321, so that the trigger lever arm 320 can tilt around the fourth rotational axis 321. The trigger lever arm 320 is at the fourth rotational axis 321 connected to a rear end of a first intermediate lever 322. Both the trigger lever arm 320 and the first intermediate lever 322 are fixedly attached to a rotating shaft, which can rotate around the fourth rotational axis. In this way, the first intermediate lever 322 is arranged in relation to the trigger lever arm 320 so that the first intermediate lever 322 rotates with the trigger lever arm 320 around the fourth rotational axis 321, when the trigger lever arm 320 is tilted. The first intermediate lever 322 is further in its front end connected to a lower end of a second intermediate lever 323 at a fifth rotational axis 327. The upper end of the second intermediate lever 323 is connected to the third rotational axis 326, and as shown in the figures, the second intermediate lever 323 is arranged essentially in an upwards-downwards direction.

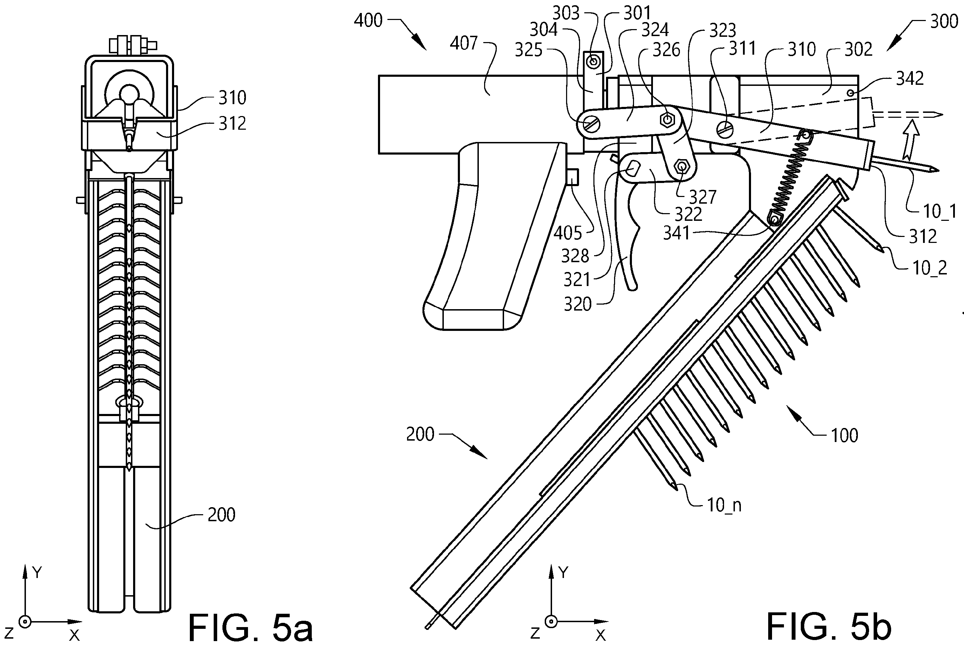

When actuating the trigger lever arm 320 from its start position, as shown in figures 4a and 4b, to its end position, as shown in figures 6a and 6b, the first intermediate lever 322 turns about the fourth rotational axis 321 and thereby pulls the second intermediate lever 323 in a direction downwards. The downwards movement of the second intermediate lever 323 causes a downwards movement of the front end of the first lever arm 324 and the rear end of the pickup lever arm 310 respectively, whereby they rotate around the second rotational axis 325 and the first rotational axis 311 respectively. The downward directed angle of the first lever arm 324 and the pickup lever arm 310, as described above, in combination with the downwards movement of the front end of the first lever arm 324 and the rear end of the pickup lever arm 310 respectively, will press the movable housing part 302 from its inner position to its outer position, simultaneously as the pickup lever arm 310 is displaced between its pickup position and its delivery position. In figures 5a and 5b, a position of the pickup lever arm 310 between the pickup position and the delivery position is shown for better understanding of the function of the pickup mechanism 300. The movable housing part 302 may be arranged with a lower stop pin 341 and an upper stop pin 342 on one or both sides of the movable housing part, where the stop pins delimit the movement of the pickup lever arm 310. The lower stop pin 341 and the upper stop pin 342 may be of any suitable construction, such as for example metal pins attached to the movable housing part 302.

The pickup lever arm 310 is thus displaced from the pickup position to the delivery position when the pickup lever arm 310 is tilted in a first rotational direction around a first rotational axis 311, and the pickup lever arm 310 is displaced from the delivery position to the pickup position when the pickup lever arm 310 is tilted in a second rotational direction around the first rotational axis 311. The second rotational direction is opposite the first rotational direction.

In the figures, the pickup mechanism 300 is arranged at the welding gun 400 such that the trigger lever arm 320 is aligned with the handle 402 of the welding gun 400. The trigger lever arm 320 is thereby centrally arranged on the pickup mechanism 300, as shown in figure 9. The pickup mechanism 300 is provided with a double sided set of interconnected lever arms 310, 322, 323, 324 actuated by the same centrally arranged trigger lever arm 320. In an alternative embodiment, the pickup mechanism 300 may be provided with a single set of interconnected lever arms arranged on only one of the sides of the pickup mechanism. Further, the trigger lever arm 320 may as an alternative be arranged so that it is not centrally arranged, such that it is not located directly in front of the welding trigger 405 of the welding gun 400.

The movable housing part 302 or the interconnected lever arms 301, 322, 323, 324 may be subjected to a spring force acting in a way such that the movable housing part 302 is in its inner position and thereby the pickup lever arm 310 in its pickup position when there is no external actuating force applied to the trigger lever arm 320.

The pickup mechanism 300 is provided with a feeding surface 330 provided in-between the pickup position and the delivery position of the pickup lever arm 310. One or more magnets may be arranged in relation to the feeding surface 330 so that magnetic forces act on the weld pins 10 when they are passing the feeding surface 330. For example can permanent magnets be used; alternatively can electro magnets be used. The weld pins 10 may then be in direct contact with the feeding surface 330 during the whole movement of the weld pin 10 from the pickup position in the magazine 200 to the welding position at the welding electrode 401, independently of how gravity is acting on the weld pins 10.

In figures 5a and 5b, the weld pin 10 is shown when it passes over the feeding surface 330. As the feeding surface 330 is arranged on the movable housing part 302, the feeding surface 330 will be aligned with the welding electrode 401 when the pickup lever arm 310 reaches the delivery position, as shown in figure 6b. Due to the magnetic forces from the permanent magnet at the feeding surface 330, the weld pin 10 that is fed from the pickup position to the welding position will be kept at the feeding surface 330 independently of the spatial position of the pickup mechanism 300 in the room. When the weld pin 10 is in its welding position, the permanent magnet at the welding electrode 401 will hold the weld pin 10 correctly positioned during the welding operation.

The pickup mechanism 300 may be provided with a spring arrangement acting upon one of the interconnected lever arms 310, 322, 323, 324, the trigger lever arm 320 and/or the movable housing part 302 to keep or restore the pickup lever arm 310 to its pickup position from the delivery position.

The pickup lever arm 310 is at the front end provided with a pickup part 312 arranged in a direction essentially perpendicular to the pickup lever arm 310, as shown more in detail in figures 8 and 9. In the embodiments shown in the figures, the pickup mechanism 300 is provided with double sets of interconnecting pickup lever arms 310, where each of the pickup lever arms 310 is provided with a pickup part 312.

The pickup parts 312 are each arranged with a feeding portion 314 and a retrieving portion 313 provided at the pickup parts 312 of the pickup lever arms 310. The feeding portion 314 is arranged for transporting or feeding the weld pin 10 from the pickup position in the magazine 200 to the welding position at the welding electrode 401. The retrieving portion 313 is arranged with a sliding surface 315 for displacing the pickup lever arm 310 in a direction essentially perpendicular to the direction of the movement between the delivery position and the pickup position when the sliding surface 315 is in contact with a first weld pin 10_1 in the pickup position in the magazine 200, and when the pickup lever arm 310 moves between the delivery position and the pickup position to pick up the first weld pin 10_1. The displacement of the pickup lever arms 310 in the direction essentially perpendicular to the direction of the movement between the delivery position and the pickup position may for example be achieved through a flexible suspension of the pickup lever arms 310, a spring loaded suspension or through using a flexible material in the pickup lever arms 310. The flexibility in the construction of the pickup lever arms 310 will allow that the pickup lever arms 310 are flexing a short distance outwards in the direction essentially perpendicular to the direction of the movement between the delivery position and the pickup position.

An exemplary embodiment of the feeding portion 314 and the retrieving portion 313 are disclosed in figure 8. The feeding portion 314 is shaped such that it grasps around the weld pin 10 and enables a lifting of the weld pin 10 from the pickup position to the welding position via the feeding surface 330. The feeding portion 314 may have an arc-formed concave shape, as shown in figure 8, which when the pickup part 312 is arranged in the pickup position is adapted to engage the first weld pin 10_1 such that the first weld pin 10_1 can be lifted by the feeding portion 314 from the pickup position to the welding position. The feeding portion 314 may also be designed with other suitable shapes than the arc-formed concave shape described. When the pickup mechanism 300 is provided with double pickup parts 312, a relatively flat feeding portion 314 can be used, since the weld pins 10 are held in position between the two feeding portions 314 when fed from the pickup position to the welding position. As shown in figure 8, the two nail pickup profiles are forming a V-shaped feeding arrangement for the weld pins 10. If the pickup mechanism 300 is provided with just one pickup lever arm 310, the feeding portion 314 may be more hook-shaped in order to achieve a sufficient lifting force on the weld pin 10.

The pickup part 312 is configured such that the sliding surface 315 bridges the first weld pin 10_1 to the feeding portion 314 at a predetermined position of the pickup lever arm 310, and such that the feeding portion 314 engages the first weld pin 10_1 in the pickup position. The retrieving portion 313 with the sliding surface 315 is arranged in connection to the feeding portion 314 and is adapted to guide the pickup lever arm 310 past the first weld pin 10_1.

The retrieving profile 313 is thus shaped with the sliding surface 315 such that when the pickup lever arm 310 is displaced from its delivery position to its pickup position and passing the first weld pin 10_1 arranged in the pickup position in the magazine 200, the pickup parts 312 of the pickup lever arms 310 are guided past the first weld pin 10_1 due to the shape of the sliding surface 315. The sliding surface 315 may thereby be provided with a suitable convex shape or a flat surface inclining outwards, as shown in figure 8. When the pickup parts 312 are passing the weld pin 10, they are pressed slightly outwards in a direction away from the weld pin 10 so that they can pass the weld pin 10. A gap is formed between the respective pickup parts 312, between the feeding portion 314 and the retrieving portion 313, in which gap the nail pin 10 can pass through when the pickup lever arm 310 is displaced from the delivery position to the pickup position.

Figure 3 discloses an embodiment of the magazine 200 adapted to be attached to the pickup mechanism 300. The first weld pin 10_1 in the stack of weld pins 100 arranged in the magazine 200 is provided at the pickup position of the pickup lever arm 310, when the magazine is attached to the pickup mechanism 300, as shown in figure 4b. The magazine 200 has an elongated shape, which is adapted to hold the stack of weld pins 100. The first pin 10_1 of the stack of weld pins 100 is arranged at a front end 230 of the magazine 200, and the magazine has a rear end 231 opposite the front end 230.

The front part of the pickup mechanism 300 is arranged with an attachment portion 331 for holding the magazine 200. The attachment portion 331 is as shown in figure 9 arranged below the feeding surface 330, and the magazine 200 can be inserted into the attachment portion 331, as indicated with the arrow in figure 9. The attachment portion 331 may comprise one or more steering pins 340 or other suitable means for holding the magazine 200 in position in relation to the pickup mechanism 300. The steering pins 340 may be of any suitable construction, such as for example metal pins attached to the movable housing part 302. The attachment portion 331 may further comprise a spring loaded locking member 343 that locks the magazine 200 in position in relation to the pickup mechanism 300. The locking member 343 may be of any suitable construction, such as for example a spring loaded pin or ball, which is interacting with a recess provided in the magazine 200.

As shown in figure 3, the magazine 200 comprises a weld pin track 210, which is adapted to receive the stack of weld pins 100. The stack of weld pins 100 may be inserted into the weld pin track 210 together with its holding arrangement 110, whereby the insert action enables a release of the first weld pin 10_1 in the stack of weld pins 100 from the rest of the weld pins 10. The release of at least the first weld pin 10_1 can also be performed manually. The holding arrangement 110 can also be completely removed manually.

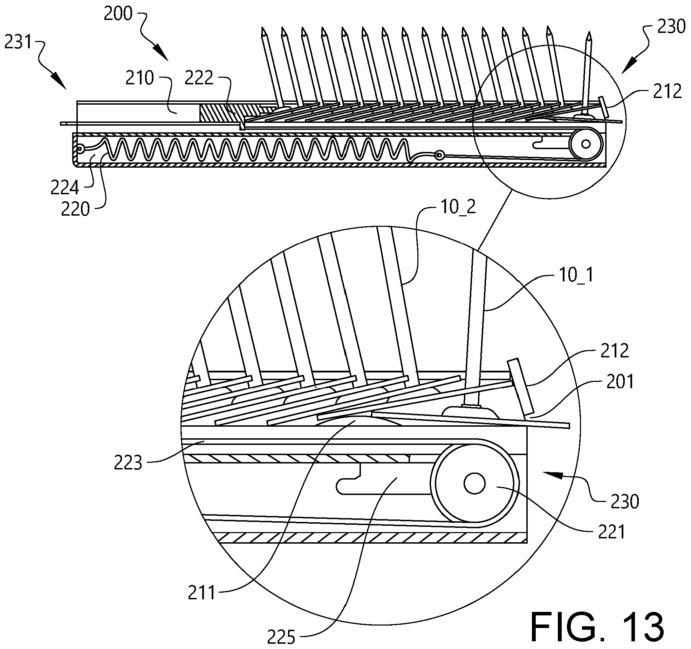

The weld pin track 210 may extend along essentially the full length of the magazine 200. The magazine 200 further comprises a force feeding device adapted to exercise a feeding force on the stack of weld pins 100. In the embodiment shown in figure 3, the force feeding device comprises a spring 220, a pulley 221, and a pushing sleigh 222. The spring 220 is at one end connected to the rear end 231 of the magazine 200 and the other end of the spring 220 is connected to a string 223 or other suitable means. The string 223 runs from the spring 220 over the pulley 221, which is arranged in the front end 230 of the magazine 200, and to the pushing sleigh 222. The string 223 is thus at one end attached to the spring 220 and at the other end to the pushing sleigh 222, as shown in figure 3. The pushing sleigh 222 interacts with the spring 220 over the pulley 221 through the string 223 such that the pushing sleigh 222 pushes the stack of weld pins 100 towards a weld pin pickup opening 201 of the magazine 200, as shown in figure 13. As shown in figure 3, the string 223 runs above the stack of weld pins 100 to the pushing sleigh 222 so that the movement of the stack of weld pins 100 is not disturbed by the string 223. The pushing sleigh 222 may be arranged in the magazine in a suitable way so that it can slide freely in the weld pin track 210. The spring 220 is arranged in a spring compartment 224 provided parallel with the weld pin track 210.

The spring compartment 224 is arranged above the weld pin track 210, in the position of the magazine 200 shown in figure 3, such that essentially the full length of the magazine 200 can be stacked with weld pins 10 when fully loaded. The string 223 is as described above attached to the spring 220, and the string 223 is running inside the spring compartment 224 to the pulley 221 arranged at the upper end of the magazine 200. The string is redirected in the opposite direction via the pulley 221 and extends further into the weld pin track 210 so that the second end of the string 223 is attached to the pushing sleigh 222. The pushing sleigh 222 is arranged to push the stack of weld pins 100 in a direction towards the upper end of the magazine 200, in the position shown in figure 3, so that the first weld pin 10_1 of the stack of weld pins 100 can be arranged in a pickup position. When the magazine 200 is loaded with the stack of weld pins 100, the string 223 and the pushing sleigh 222 are pulled further into the magazine 200, such that the spring 220 is tensioned. The string 223 is placed in the upper part of the weld pin track 210, when the magazine 200 has the position shown in figure 3, and when the stack of weld pins 100 is inserted into the magazine 200 from the bottom, the pushing sleigh 222 is positioned below the last weld pin 10_n in the stack of weld pins 100. The pushing sleigh 222 thereby exercises a feeding force on the stack of weld pins 100, so that when the first pin 10_1 in the stack 100 is picked up by the pickup mechanism 300, the next pin 10_2 is pushed into the pickup position.

As schematically shown in figure 13, the weld pin track 210 may be provided with an elevation 211 that will position the second weld pin 10_2 in the stack of weld pins 100 in a position, where its sheet part does not rest upon the first weld pins 10_1 sheet part, the front part of the second weld pin 10_2 is thereby lifted so that it is not impacting the first weld pin 10_1 in its pickup position. The elevation 211 may be provided with a sloping surface facing the stack of weld pins 100, which sloping surface lifts the second weld pin 10_2 into the desired position when the stack of weld pins 100 is pushed in a direction towards the pickup opening 201 in the magazine 200. The elevation 211 may be made of any suitable material, such as for example metal, and is extending across the weld pin track 210 essentially perpendicular to the feeding direction of the stack of weld pins. The elevation 211 may additional have an exemplary function of positioning the rear part of the first weld pin 10_1 in order for the first weld pin 10_1 to receive a correct orientation in the pickup position. The elevation 211 may for example take the form of an elongated ridge, a more circular ball segment or be divided into several small elevation segments of suitable type.

As shown in figures 3, 6a, 6b and 13, the magazine 200 may be arranged with holding edges 212 for holding the stack of weld pins 100 in position in the magazine 200. The holding edges 212 may be arranged at the front end 230 of the magazine 200 on each side of the stack of weld pins 100 so that the front edge of the second weld pin 10_2 is resting against the holding edges 212. There is a gap 213 arranged between the holding edges 212 so that the nail part 12 of the weld pins 10 can pass in the gap 213, and the holding edges 212 may, as shown in figure 13, be slightly inclined in a direction towards the stack of weld pins 100 in the magazine 200 to better hold the stack of weld pins 100 in position. When the first weld pin 10_1 is removed from the magazine 200, the second weld pin 10_2 can through interaction with the pushing sleigh 222, the inclined holding edges 212, and the elevation 211 slide forward in the magazine 200, with the sheet part 11 below the holding edges 212 at the weld pin pickup opening 201 and the nail part 12 in the gap 213, when the magazine is positioned as shown in figure 13. In this way, when the first weld pin 10_1 is picked up from the magazine 200 with the pickup mechanism 300, the second weld pin 10_2 will move forward in the magazine 200 through the pushing action from the pushing sleigh 222 and then become the first weld pin 10_1 in the stack of weld pins 100. The inclined holding edges 212 may be shaped to match the shape of the sheet part 11 of the weld pins 10 for a secure holding of the weld pins 10 in the magazine 200.

The magazine may be provided with a groove 225 or other suitable means for holding the magazine 200 in position in relation to the pickup mechanism 300. The groove 225 may be arranged in each side wall of the magazine, as schematically shown in figure 9, so that the grooves 225 can interact with the steering pins 340 arranged in the front part of the pickup mechanism 300. If desired, one or more front steering pins 344 may be arranged in the front part of the pickup mechanism, as shown in figure 9, for example in a position aligned with the length direction of the magazine 200. The front steering pins secure that the magazine 200 is prevented from rotating about the steering pins 340. The magazine 200 may further be provided with a recess or similar means for locking the magazine 200 in position in relation to the pickup mechanism 300. The recess is arranged to interact with the spring loaded locking member 343 provided on the pickup mechanism 300.

The function of the welding system 500 and especially the pickup mechanism 300 will be further described below. In figures 4a and 4b, the welding system 500 with the weld pin in a pickup position is shown. As described above, the welding system 500 comprises the welding gun 400, the pickup mechanism 300 and the magazine 200. The magazine 200 is loaded with the stack of weld pins 100 and is attached to the pickup mechanism 300. The pickup mechanism 300 is in the pickup position, where the first weld pin 10_1 in the stack of weld pins 100 may be fed to the welding electrode 401 in the welding position.

By pressing the trigger lever arm 320 the actuation force will, via the interconnected lever arms 310, 322, 323, 324 and the pickup part 312, lift the weld pin 10_1 from its pickup position in the magazine 200 via the feeding surface 330 to the welding position shown in figures 7a and 7b at the welding electrode 401. In figures 5a and 5b, the welding system is shown with the pickup lever arm 310 in a position between the pickup position and the delivery position, where the weld pin 10 is fed to the welding electrode 401 via the feeding surface 330. At the welding electrode 401 the weld pin 10 is held in position for welding by the one or more permanent magnets. As described above, the pickup lever arm 310 is displaced simultaneously with the movable housing part 302 of the pickup mechanism 300, so that the movable housing part 302 is displaced from its inner position, as shown in figure 4b, to its outer position, as shown in figure 6b. When the weld pin 10 is displaced to the welding position, the pickup lever arm 310 is displaced back from the delivery position to the pickup position so that a new weld pin 10 is ready to be picked up by the pickup lever arm 310, as shown in figures 7a and 7b.

The magazine 200 is attached to the movable housing part 302 of the pickup mechanism 300. When the movable housing part 302 and the pickup lever arm 310 are in the inner position, as shown in figure 4b, the whole magazine 200 is in a more retracted position than when the movable housing part 302 and the pickup lever arm 310 is in the delivery position, as shown in figure 6b. In this way, the weld pins 10 in the magazine 200 do not interfere when the welding gun 400 is being operated.

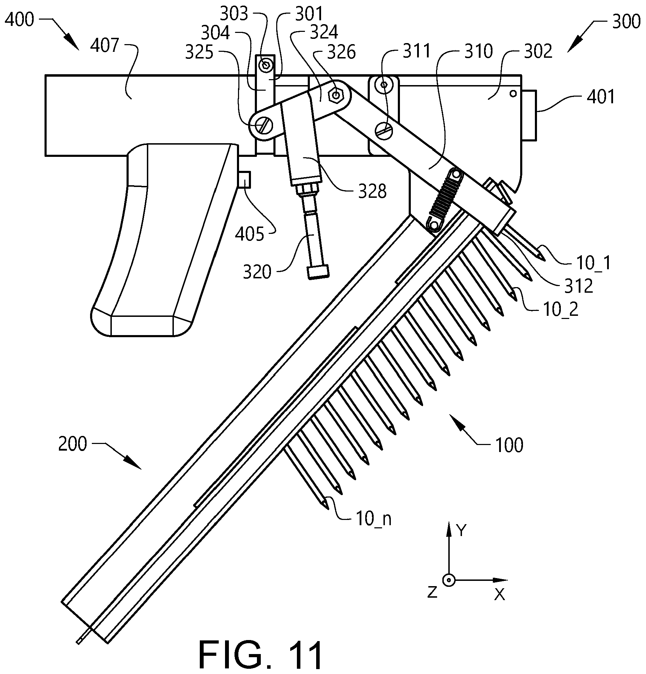

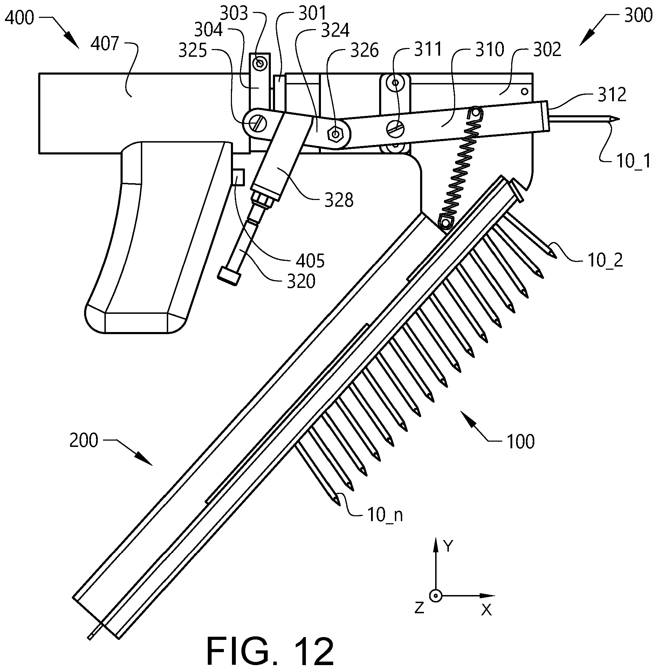

An alternative embodiment of an actuating mechanism of the pickup mechanism 300 is schematically shown in figures 11 and 12. The pickup mechanism 300 is in this embodiment provided with a trigger lever arm 320, which can be displaced between a start position, as shown in figure 11, and an end position, as shown in figure 12. When the trigger lever arm 320 is displaced from the start position to the end position, a pickup lever arm 310 with a pickup part 312 is displaced from a pickup position, as shown in figure 11, to a delivery position, as shown in figure 12. The pickup lever arm 310 with the pickup part 312 is provided with a feeding portion 314 arranged at the front end of the pickup lever arm 310, in the same way as described in the earlier embodiments in relation to figure 8, and the feeding portion 314 is designed to transport a weld pin 10 from the pickup position to the welding position. The pickup lever arm 310 may thus in this embodiment be of the same construction and design as described in the earlier embodiments above.

The pickup lever arm 310 and a first lever arm 324 are connecting a fixed housing part 301 and a movable housing part 302 of the pickup mechanism. The movable housing part 302 is arranged in relation to the fixed housing part 301 so that it can slide between an inner position and an outer position in the axial direction of the cylinder 403, when the pickup mechanism 300 is mounted on the welding gun 400. The interconnecting lever arms may be symmetrically arranged on both sides of the pickup mechanism 300, or as an alternative arranged on only one of the sides of the pickup mechanism 300. The pickup lever arm 310 is connected to the movable housing part 302 at a first rotational axis 311, and arranged so that the pickup lever arm 310 can tilt around the first rotational axis 311. The pickup lever arm 310 is connected to the first rotational axis 311 in a position between its front end and rear end. The first lever arm 324 is connected to the fixed housing part 301 at its rear end so that it can rotate around a second rotational axis 325. The front end of the first lever arm 324 and the rear end of the pickup lever arm 310 are rotatably connected to a third rotational axis 326. In this way, the first lever arm 324 and the pickup lever arm 310 can rotate in relation to each other around the third rotational axis 326. When the movable housing part 302 is in its inner position, as shown in figure 11, the first lever arm 324 is angled in a direction downwards from the third rotational axis 326 towards the second rotational axis 325, and the pickup lever arm 310 is angled in a direction downwards from the third rotational axis 326 towards the first rotational axis 311. In this position, corresponding to the pickup position, the rear end of the pickup lever arm 310 and the front end of the first lever arm 324 are located in a position, which is higher than the positions of the front end of the pickup lever arm 310 and the rear end of the first lever arm 324 respectively.

The trigger lever arm 320 is at its upper end attached to a lever arm bracket 328 attached to the first lever arm 324, so that the trigger lever arm 320 is rotatably displacing or tilting the first lever arm 324 around the second rotational axis 325 when being actuated.

When actuating the trigger lever arm 320 from its start position, as shown in figure 11, to its end position, as shown in figure 12, the first lever 324 turns about the second rotational axis 325 and thereby pulls the third rotational axis 326 in a direction downwards, causing a downwards movement of the front end of the first lever arm 324 and the rear end of the pickup lever arm 310 respectively, whereby they rotate around the second rotational axis 325 and the first rotational axis 311 respectively. The downward directed angle of the first lever arm 324 and the pickup lever arm 310, as described above, in combination with the downwards movement of the front end of the first lever arm 324 and the rear end of the pickup lever arm 310 respectively, will press the movable housing part 302 from its inner position to its outer position, simultaneously as the pickup lever arm 310 is displaced between its pickup position and its delivery position.

Also in this embodiment, the pickup mechanism 300 may be arranged in any angle in relation to the cylinder 403 of the welding gun 400. It is thus possible to rotate the pickup mechanism around the cylinder axis 404 of the cylinder 403, or arrange the pickup mechanism in any desired angle of rotation in relation to the cylinder axis 404.

The pickup mechanism 300 is provided with a double sided set of pickup lever arms 310 and first lever arms 324 actuated by the same centrally arranged trigger lever arm 320. The lever arm bracket 328 may for example be U-shaped, or have another suitable shape, and is connected to the first lever arms 324 with suitable fastening means. The lever arm bracket 328 is extending in a direction downwards from the first lever arms 324 and below the movable housing part 302, when the pickup mechanism 300 is mounted to the welding gun 400 in the position shown in figures 11 and 12.

The movable housing part 302 may be subjected to a spring force acting in a way such that the movable housing part 302 is in its inner position and thereby the pickup lever arm 310 in its pickup position when there is no external actuating force applied to the trigger lever arm 320.

The pickup mechanism 300 may be provided with a spring arrangement acting upon one of the pickup lever arm 310, the first lever arm 324, the trigger lever arm 320 and/or the movable housing part 302 to keep or restore the pickup lever arm 310 to its pickup position from the delivery position.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made and equivalents may be substituted for elements thereof without departing from the scope of the present invention as defined in the appended claims.

### REFERENCE SIGNS

- 10:: Weld pin
- 11:: Sheet part
- 12:: Nail part
- 13:: Nail tip
- 14:: Notch
- 15:: Guiding edges
- 16:: Flat side
- 17:: Nail side
- 18:: Side edges
- 100:: Stack of weld pins
- 110:: Holding arrangement
- 111:: Track
- 112:: Bottom wall
- 113:: Side walls
- 200:: Magazine
- 201:: Weld pin pickup opening
- 210:: Weld pin track
- 211:: Elevation
- 212:: Holding edge
- 213:: Gap
- 220:: Spring
- 221:: Pulley
- 222:: Pushing sleigh
- 223:: String
- 224:: Spring compartment
- 225:: Groove
- 230:: Front end
- 231:: Rear end
- 300:: Pickup mechanism
- 301:: Fixed housing part
- 302:: Movable housing part
- 303:: Attachment screw
- 304:: Clamp ring
- 310:: Pickup lever arm
- 311:: First rotational axis
- 312:: Pickup part
- 313:: Retrieving portion
- 314:: Feeding portion
- 315:: Sliding surface
- 320:: Trigger lever arm
- 321:: Fourth rotational axis
- 322:: First intermediate lever
- 323:: Second intermediate lever
- 324:: First lever arm
- 325:: Second rotational axis
- 326:: Third rotational axis
- 327:: Fifth rotational axis
- 328:: Lever arm bracket
- 330:: Feeding surface
- 340:: Steering pin
- 341:: Lower stop pin
- 342:: Upper stop pin
- 343:: Locking member
- 344:: Front steering pins
- 400:: Welding gun
- 401:: Welding electrode
- 402:: Handle
- 403:: Cylinder
- 404:: Cylinder axis
- 405:: Welding trigger
- 406:: Electric power supply cable
- 407:: Housing
- 408:: Front part
- 409:: Rear part
- 500:: Welding system

## Claims

1. A weld pin (10) comprising a nail part (12) attached to a sheet part (11), such that the weld pin (10) has a flat side (16) and a nail side (17), and
**characterized in that**
the nail part (12) is attached to the sheet part (11) so that a nail head is arranged on the nail part (12) opposite a tip (13) and is flush with the flat side (16) of the weld pin (10), whereby the nail head of the nail part (12) is arranged opposite the nail side (17), wherein the sheet part (11) comprises two essentially parallel guiding edges (15) and a notch (14) extending from a side edge (18) of the sheet part (11) in a direction towards the nail part (12), wherein the two guiding edges (15) are arranged essentially parallel with the notch (14), and the nail part (12) is extending through the sheet part (11) essentially in the centre of the sheet part (11) and the notch (14) stretches from a side edge (18) and close to the centre of the sheet part (11), but not all the way to the nail part (12).

2. The weld pin (10) according to claim 1, wherein the width of the notch (14) is smaller than the double diameter of the nail part (12).

3. A stack (100) comprising weld pins (10) as defined in any one of the preceding claims 1 or 2, wherein the weld pins (10) are arranged in the stack (100) such that a nail part (12) of a preceding weld pin (10_1) extends through the notch (14) of at least one succeeding weld pin (10_2) in the stack (100), and wherein a holding arrangement (110) at least connects a first weld pin (10_1) with a last weld pin (10_n) in the stack (100) of weld pins.

4. The stack (100) according to claim 3, wherein the holding arrangement (110) comprises a strip extending from the first weld pin (10_1) to the last weld pin (10_n), or an adhesive connecting each of the weld pins in the stack with the neighbouring weld pin, or a track in which the stack of weld pins is inserted.

5. A magazine (200) for a stack (100) of weld pins (10) according to any one of the preceding claims 3 or 4, wherein the magazine (200) comprises a weld pin track (210) for receiving the stack (100) of weld pins (10), the weld pin track (210) having parallel walls (113), and a force feeding device adapted to exercise a feeding force on the stack (100) of weld pins, **characterized in that** the force feeding device comprises a spring (220), a pulley (221), and a pushing sleigh (222), wherein the pushing sleigh (222) interacts with the spring (220) over the pulley (221) such that the pushing sleigh (222) pushes the stack (100) of weld pins towards a weld pin pickup opening (201) of the magazine (200).

6. A pickup mechanism (300) for feeding of weld pins (10) according to any one of the preceding claims 1 or 2 to a welding electrode (401) of a welding gun (400), where the pickup mechanism (300) is attachable to the welding gun (400) in connection to the welding electrode (401), and the pickup mechanism (300) comprises double sets of interconnecting pickup lever arms (310) displaceable between the pickup position and a delivery position,
**characterized in that** each of the pickup lever arms (310) is provided with a pickup part (312) arranged essentially perpendicular to the pickup lever arm (310) and the pickup part (312) comprises a feeding portion (314) and a retrieving portion (313), where the feeding portion (314) is provided for receiving the nail part (12) of the weld pin (10), and the retrieving portion (313) is provided in connection to the feeding portion (314) and is provided with a sliding surface, adapted to guide the pickup lever arms 310 past a weld pin (10_1) provided in the pickup position and wherein the pickup part is configured such that the sliding surface bridges the weld pin to the feeding portion at a predetermined position of the pickup lever arms such that the weld pin can engage the feeding portion in the pickup position.

7. The pickup mechanism (300) according to claim 6, wherein the double-sided pickup lever arm (310) is displaced from the pickup position to the delivery position when the pickup lever arm (310) is tilted in a first rotational direction around a first rotational axis (311), and where the double-sided pickup lever arm (310) is displaced from the delivery position to the pickup position when the pickup lever arm (310) is tilted in a second rotational direction around the first rotational axis (311), wherein the second rotational direction is opposite the first rotational direction.

8. The pickup mechanism (300) according to claim 6 or 7, wherein the feeding portion (314) has an arc-formed concave shape, which when the pickup part (312) is arranged in the pickup position is adapted to engage the first weld pin (10_1) such that the first weld pin (10_1) can be lifted by the feeding portion (314) from the pickup position to the welding position.

9. The pickup mechanism (300) according to any one of the preceding claims 6-8, wherein the pickup mechanism (300) further comprises a trigger lever arm (320), which can be tilted between a start position and an end position, where the trigger lever arm (320) is interconnected with the double sided pickup lever arm (310) such that the trigger lever arm (320) is displacing the double-sided pickup lever arm (310) from the pickup position to the delivery position when the trigger lever arm (320) is tilted from its start position to its end position.

10. The pickup mechanism (300) according to claim 9, wherein the pickup mechanism (300) further comprises a fixed housing part (301) and a movable housing part (302), where the fixed housing part (301) is adapted to be attached to a cylinder (403) of the welding gun (400) and where the movable housing part (302) is interconnected with the trigger lever arm (320) such that the movable hosing part (302) is displaced along a cylinder axis (404) of the cylinder (403) when the trigger lever arm (320) is tilted from its start position to its end position.

11. A system for welding comprising a stack (100) according to any one of claims 3 or 4, a welding gun (400), a magazine (200) according to claim 5 and a pickup mechanism (300) according to any one of claims 6-10,
**characterized in that** the pickup mechanism (300) is adapted for feeding the weld pins (10) arranged in a stack of weld pins (100) in the magazine (200) from a pickup position arranged at an interface between the pickup mechanism (300) and the magazine (200).to a welding position at a welding electrode (401) of the welding gun (400).

12. A method for feeding of weld pins (10) with a pickup mechanism (300) from a magazine (200) to a welding electrode (401) of a welding gun (400), wherein the weld pin (10) comprises a nail part (12) attached to a sheet part (11), said sheet part (11) comprising two essentially parallel guiding edges (15) and a notch (14) extending from a side edge (18) of the sheet part (11) in a direction towards the nail part (12), where the pickup mechanism (300) is attachable to the welding gun (400) in connection to the welding electrode (401), and where the magazine (200) is attachable to the pickup mechanism (300), wherein the pickup mechanism (300) comprises double sets of interconnecting pickup lever arms (310) displaceable between a pickup position and a delivery position,
**characterized in that** the method comprises the steps:
displacing the weld pin (10) from a pickup position in the magazine (200) to a welding position at the welding electrode (401) with each of the pickup lever arms (310), where each of the pickup lever arms (310) has a pickup part (312) comprising a feeding portion (314) for receiving the nail part (12) of the weld pin (10) to feed the weld pins (10) from the pickup position to the welding position, and where the pickup part (312) comprises a retrieving portion (313) arranged with a sliding surface (315); and
displacing the pickup lever arms (310) with the sliding surface (315) in a direction essentially perpendicular to the direction of the movement between the delivery position and the pickup position when the sliding surface (315) is in contact with a first weld pin (10_1) in the magazine (200) when the pickup lever arms (310) moves between the delivery position and the pickup position to pick up the first weld pin (10_1), where the pickup part (312) is configured such that the sliding surface (315) bridges the first weld pin (10_1) to the feeding portion (314) at a predetermined position of the pickup lever arms (310) such that the first weld pin (10_1) engages the feeding portion (314) in the pickup position.

## Patentansprüche

1. Schweißbolzen (10), der einen Nagelteil (12), der an einem Schaftteil (11) befestigt ist, umfasst, sodass der Schweißbolzen (10) eine flache Seite (16) und eine Nagelseite (17) aufweist, und
**dadurch gekennzeichnet, dass**
der Nagelteil (12) an dem Schaftteil (11) befestigt ist, sodass ein Nagelkopf auf dem Nagelteil (12) entgegengesetzt zu einer Spitze (13) angeordnet ist und mit der flachen Seite (16) des Schweißbolzens (10) bündig ist, wodurch der Nagelkopf des Nagelteils (12) entgegengesetzt zur Nagelseite (17) angeordnet ist, wobei der Schaftteil (11) zwei im Wesentlichen parallele Führungskanten (15) und eine Kerbe (14), die sich von einer Seitenkante (18) des Schaftteils (11) in einer Richtung zu dem Nagelteil (12) erstreckt, umfasst, wobei die zwei Führungskanten (15) im Wesentlichen parallel zu der Kerbe (14) angeordnet sind und der Nagelteil (12) sich durch den Schaftteil (11) im Wesentlichen in der Mitte des Schaftteils (11) erstreckt und die Kerbe (14) sich von einer Seitenkante (18) und nahe der Mitte des Schaftteils (11) ausdehnt, aber nicht bis zu dem Nagelteil (12).

2. Schweißbolzen (10) nach Anspruch 1, wobei die Breite der Kerbe (14) kleiner als der doppelte Durchmesser des Nagelteils (12) ist.

3. Stapel (100), der Schweißbolzen (10) nach einem der vorstehenden Ansprüche 1 oder 2 umfasst, wobei die Schweißbolzen (10) so in dem Stapel (100) angeordnet sind, dass sich ein Nagelteil (12) eines vorangehenden Schweißbolzens (10_1) durch die Kerbe (14) mindestens eines nachfolgenden Schweißbolzens (10_2) in dem Stapel (100) erstreckt und wobei eine Halteanordnung (110) mindestens einen ersten Schweißbolzen (10_1) mit einem letzten Schweißbolzen (10_n) in dem Stapel (100) von Schweißbolzen verbindet.

4. Stapel (100) nach Anspruch 3, wobei die Halteanordnung (110) ein Band, das sich von dem ersten Schweißbolzen (10_1) zu dem letzten Schweißbolzen (10_n) erstreckt, oder einen Klebstoff, der jeden der Schweißbolzen in dem Stapel mit dem angrenzenden Schweißbolzen verbindet, oder eine Schiene, in der der Stapel von Schweißbolzen eingesetzt ist, umfasst.

5. Magazin (200) für einen Stapel (100) von Schweißbolzen (10) nach einem der vorstehenden Ansprüche 3 oder 4, wobei das Magazin (200) eine Schweißbolzenschiene (210) zum Aufnehmen des Stapels (100) von Schweißbolzen (10) umfasst, die Schweißbolzenschiene (210) parallele Wände (113) und eine Vorschubvorrichtung, die dazu geeignet ist, einen Vorschub auf den Stapel (100) von Schweißbolzen auszuüben, aufweist, **dadurch gekennzeichnet, dass** die Vorschubvorrichtung eine Feder (220), eine Rolle (221) und einen Schiebeschlitten (222) umfasst, wobei der Schiebeschlitten (222) mit der Feder (220) über die Rolle (221) interagiert, sodass der Schiebeschlitten (222) den Stapel (100) von Schweißbolzen zu einer Schweißbolzenaufnahmeöffnung (201) des Magazins (200) schiebt.

6. Aufnahmemechanismus (300) für eine Zufuhr von Schweißbolzen (10) nach einem der vorstehenden Ansprüche 1 oder 2 zu einer Schweißelektrode (401) einer Schweißpistole (400), wo der Aufnahmemechanismus (300) an der Schweißpistole (400) in Verbindung mit der Schweißelektrode (401) angebracht werden kann, und der Aufnahmemechanismus (300) doppelte Sätze von untereinander verbundenen Aufnahmeheberarmen (310) umfasst, die zwischen der Aufnahmeposition und einer Ausgabeposition verschoben werden können,
**dadurch gekennzeichnet, dass** jeder der Aufnahmeheberarme (310) mit einem Aufnahmeteil (312) versehen ist, das im Wesentlichen senkrecht zu dem Aufnahmeheberarm (310) angeordnet ist, und der Aufnahmeteil (312) einen Zufuhrabschnitt (314) und einen Bezugsabschnitt (313) umfasst, wo der Zufuhrabschnitt (314) zum Empfangen des Nagelteils (12) des Schweißbolzens (10) vorgesehen ist und der Bezugsabschnitt (313) in Verbindung mit dem Zufuhrabschnitt (314) vorgesehen ist und mit einer Gleitfläche versehen ist, die dazu geeignet ist, die Aufnahmeheberarme (310) über einen Schweißbolzen (10_1) zu führen, der in der Aufnahmeposition vorgesehen ist, und wobei der Aufnahmeteil so ausgelegt ist, dass die Gleitfläche den Schweißbolzen zu dem Zufuhrabschnitt bei einer vorgegebenen Position der Aufnahmeheberarme überführt, sodass der Schweißbolzen mit dem Zufuhrabschnitt in der Aufnahmeposition eingreifen kann.

7. Aufnahmemechanismus (300) nach Anspruch 6, wobei der doppelseitige Aufnahmeheberarm (310) von der Aufnahmeposition zu der Abgabeposition verschoben wird, wenn der Aufnahmeheberarm (310) in einer ersten Drehrichtung um eine erste Drehachse (311) geneigt wird, und wo der doppelseitige Aufnahmeheberarm (310) von der Abgabeposition zu der Aufnahmeposition verschoben wird, wenn der Aufnahmeheberarm (310) in einer zweiten Drehrichtung um die erste Drehachse (311) geneigt wird, wobei die zweite Drehrichtung der ersten Drehrichtung entgegengesetzt ist.

8. Aufnahmemechanismus (300) nach Anspruch 6 oder 7, wobei der Zufuhrabschnitt (314) eine bogenförmige konkave Form aufweist, die, wenn der Aufnahmeteil (312) in der Aufnahmeposition angeordnet ist, dazu geeignet ist, mit dem ersten Schweißbolzen (10_1) einzugreifen, sodass der erste Schweißbolzen (10_1) von dem Zufuhrabschnitt (314) von der Aufnahmeposition zu der Schweißposition angehoben werden kann.

9. Aufnahmemechanismus (300) nach einem der vorstehenden Ansprüche 6-8, wobei der Aufnahmemechanismus (300) weiter einen Auslöseheberarm (320) umfasst, der zwischen einer Startposition und einer Endposition geneigt werden kann, wo der Auslöseheberarm (320) so mit dem doppelseitigen Aufnahmeheberarm (310) verbunden ist, dass der Auslöseheberarm (320) den doppelseitigen Aufnahmeheberarm (310) von der Aufnahmeposition zu der Abgabeposition verschiebt, wenn der Auslöseheberarm (320) von seiner Startposition zu seiner Endposition geneigt wird.

10. Aufnahmemechanismus (300) nach Anspruch 9, wobei der Aufnahmemechanismus (300) weiter einen fixierten Gehäuseteil (301) und einen beweglichen Gehäuseteil (302) umfasst, wo der fixierte Gehäuseteil (301) dazu geeignet ist, an einem Zylinder (403) der Schweißpistole (400) befestigt zu werden, und wo der bewegliche Gehäuseteil (302) so mit dem Auslöseheberarm (320) verbunden ist, dass der bewegliche Gehäuseteil (302) entlang einer Zylinderachse (404) des Zylinders (403) verschoben wird, wenn der Auslöseheberarm (320) von seiner Startposition zu seiner Endposition geneigt wird.

11. System zum Schweißen, das einen Stapel (100) nach einem der Ansprüche 3 oder 4, eine Schweißpistole (400), ein Magazin (200) nach Anspruch 5 und einen Aufnahmemechanismus (300) nach einem der Ansprüche 6-10 umfasst,
**dadurch gekennzeichnet, dass** der Aufnahmemechanismus (300) dazu geeignet ist, die Schweißbolzen (10), die in einem Stapel von Schweißbolzen (100) in dem Magazin (200) angeordnet sind, von einer Aufnahmeposition, die bei einer Grenzfläche zwischen dem Aufnahmemechanismus (300) und dem Magazin (200) angeordnet ist, zu einer Schweißposition bei einer Schweißelektrode (401) der Schweißpistole (400) zuzuführen.

12. Verfahren zum Zuführen von Schweißbolzen (10) mit einem Aufnahmemechanismus (300) von einem Magazin (200) zu einer Schweißelektrode (401) einer Schweißpistole (400), wobei der Schweißbolzen (10) einen Nagelteil (12) umfasst, der an einem Schaftteil (11) befestigt ist, der Schaftteil (11) zwei im Wesentlichen parallele Führungskanten (15) und eine Kerbe (14), die sich von einer Seitenkante (18) des Schaftteils (11) in Richtung des Nagelteils (12) erstreckt, umfasst, wo der Aufnahmemechanismus (300) an der Schweißpistole (400) in Verbindung mit der Schweißelektrode (401) befestigt werden kann, und wo das Magazin (200) an dem Aufnahmemechanismus (300) befestigt werden kann, wobei der Aufnahmemechanismus (300) doppelte Sätze von untereinander verbundenen Aufnahmeheberarmen (310) umfasst, die zwischen einer Aufnahmeposition und einer Abgabeposition verschoben werden können,
**dadurch gekennzeichnet, dass** das Verfahren die folgenden Schritte umfasst:
Verschieben des Schweißbolzens (10) von einer Aufnahmeposition in dem Magazin (200) zu einer Schweißposition bei der Schweißelektrode (401) mit jedem der Aufnahmeheberarme (310), wo jeder der Aufnahmeheberarme (310) einen Aufnahmeteil (312) aufweist, der einen Zufuhrabschnitt (314) zum Aufnehmen des Nagelteils (12) des Schweißbolzens (10) umfasst, um die Schweißbolzen (10) von der Aufnahmeposition zu der Schweißposition zuzuführen, und wo der Aufnahmeteil (312) einen Bezugsabschnitt (313) umfasst, der mit einer Gleitfläche (315) angeordnet ist; und
Verschieben der Aufnahmeheberarme (310) mit der Gleitfläche (315) in einer Richtung im Wesentlichen senkrecht zu der Richtung der Bewegung zwischen der Abgabeposition und der Aufnahmeposition, wenn die Gleitfläche (315) mit einem ersten Schweißbolzen (10_1) in dem Magazin (200) in Kontakt ist, wenn die Aufnahmeheberarme (310) sich zwischen der Abgabeposition und der Aufnahmeposition bewegen, um den ersten Schweißbolzen (10_1) aufzunehmen, wo der Aufnahmeteil (312) so ausgelegt ist, dass die Gleitfläche (315) den ersten Schweißbolzen (10_1) zu dem Zufuhrabschnitt (314) bei einer vorgegebenen Position der Aufnahmeheberarme (310) überführt, sodass der erste Schweißbolzen (10_1) mit dem Zufuhrabschnitt (314) in der Aufnahmeposition eingreift.

## Revendications

1. Goujon de soudage (10) comprenant une partie de clou (12) fixée à une partie de feuille (11), de sorte que le goujon de soudage (10) présente un côté plat (16) et un côté clou (17), et
**caractérisé en ce que**
la partie de clou (12) est fixée à la partie de feuille (11) de sorte qu'une tête de clou soit agencée sur la partie de clou (12) à l'opposé d'une pointe (13) et affleure le côté plat (16) du goujon de soudage (10), selon lequel la tête de clou de la partie de clou (12) est agencée à l'opposé du côté clou (17), dans lequel la partie de feuille (11) comprend deux bords de guidage sensiblement parallèles (15) et une encoche (14) s'étendant depuis un bord latéral (18) de la partie de feuille (11) dans une direction vers la partie de clou (12), dans lequel les deux bords de guidage (15) sont agencés sensiblement parallèlement à l'encoche (14), et la partie de clou (12) s'étend à travers la partie de feuille (11) sensiblement au centre de la partie de feuille (11) et l'encoche (14) s'étend depuis un bord latéral (18) et à proximité du centre de la partie de feuille (11), mais pas jusqu'à la partie de clou (12).

2. Goujon de soudage (10) selon la revendication 1, dans lequel la largeur de l'encoche (14) est plus petite que le double diamètre de la partie de clou (12).

3. Empilement (100) comprenant des goujons de soudage (10) selon l'une quelconque des revendications 1 ou 2 précédentes, dans lequel les goujons de soudage (10) sont agencés dans l'empilement (100) de sorte qu'une partie de clou (12) d'un goujon de soudage précédent (10_1) s'étende à travers l'encoche (14) d'au moins un goujon de soudage suivant (10_2) dans l'empilement (100), et dans lequel un agencement de retenue (110) relie au moins un premier goujon de soudage (10_1) avec un dernier goujon de soudage (10_n) dans l'empilement (100) des un goujons de soudage.

4. Empilement (100) selon la revendication 3, dans lequel l'agencement de retenue (110) comprend une bande s'étendant du premier goujon de soudage (10_1) au dernier goujon de soudage (10_n), ou un adhésif reliant chacun des goujons de soudage dans l'empilement avec le goujon de soudage voisin, ou un rail dans lequel l'empilement de goujons de soudage est inséré.

5. Magasin (200) pour un empilement (100) de goujons de soudage (10) selon l'une quelconque des revendications 3 ou 4 précédentes, dans lequel le magasin (200) comprend un rail de goujons de soudage (210) pour recevoir l'empilement (100) de goujons de soudage (10), le rail de goujons de soudage (210) présentant des parois parallèles (113), et un dispositif d'alimentation forcée conçu pour exercer une force d'alimentation sur l'empilement (100) de goujons de soudage, **caractérisé en ce que** le dispositif d'alimentation forcée comprend un ressort (220), une poulie (221), et une glissière de poussée (222), dans lequel la glissière de poussée (222) interagit avec le ressort (220) sur la poulie (221) de sorte que la glissière de poussée (222) pousse l'empilement (100) de goujons de soudage vers une ouverture de préhension de goujon de soudage (201) du magasin (200).

6. Mécanisme de préhension (300) pour l'alimentation en goujons de soudage (10) selon l'une quelconque des revendications 1 ou 2 précédentes d'une électrode de soudage (401) d'un pistolet à souder (400), dans lequel le mécanisme de préhension (300) peut être fixé au pistolet à souder (400) en lien avec l'électrode de soudage (401), et le mécanisme de préhension (300) comprend deux ensembles de bras de levier de préhension reliés entre eux (310) mobiles entre la position de préhension et une position de distribution,
**caractérisé en ce que** chacun des bras de levier de préhension (310) est doté d'une partie de préhension (312) agencée sensiblement perpendiculairement au bras de levier de préhension (310) et la partie de préhension (312) comprend une portion d'alimentation (314) et une portion de récupération (313), dans lequel la portion d'alimentation (314) est conçue pour recevoir la partie de clou (12) du goujon de soudage (10), et la portion de récupération (313) est fournie en lien avec la portion d'alimentation (314) et est dotée d'une surface de glissement, conçue pour guider les bras de levier de préhension (310) au-delà d'un goujon de soudage (10_1) fourni dans la position de préhension et dans lequel la partie de préhension est configurée de sorte que la surface de glissement relie le goujon de soudage à la portion d'alimentation en une position prédéterminée des bras de levier de préhension de sorte que le goujon de soudage puisse venir en prise avec la portion d'alimentation dans la position de préhension.

7. Mécanisme de préhension (300) selon la revendication 6, dans lequel le bras de levier de préhension bilatéral (310) est déplacé de la position de préhension à la position de distribution lorsque le bras de levier de préhension (310) est incliné dans un premier sens de rotation autour d'un premier axe de rotation (311), et dans lequel le bras de levier de préhension bilatéral (310) est déplacé de la position de distribution à la position de préhension lorsque le bras de levier de préhension (310) est incliné dans un second sens de rotation autour du premier axe de rotation (311), dans lequel le second sens de rotation est opposé au premier sens de rotation.

8. Mécanisme de préhension (300) selon la revendication 6 ou 7, dans lequel la portion d'alimentation (314) présente une forme concave arquée, qui lorsque la partie de préhension (312) est agencée dans la position de préhension, est conçue pour venir en prise avec le premier goujon de soudage (10_1) de sorte que le premier goujon de soudage (10_1) puisse être levé par la portion d'alimentation (314) de la position de préhension à la position de soudage.

9. Mécanisme de préhension (300) selon l'une quelconque des revendications 6-8 précédentes, dans lequel le mécanisme de préhension (300) comprend en outre un bras de levier déclencheur (320), qui peut être incliné entre une position de départ et une position de fin, dans lequel le bras de levier déclencheur (320) est relié au bras de levier de préhension bilatéral (310) de sorte que le bras de levier déclencheur (320) déplace le bras de levier de préhension bilatéral (310) de la position de préhension à la position de distribution lorsque le bras de levier déclencheur (320) est incliné de sa position de départ à sa position de fin.

10. Mécanisme de préhension (300) selon la revendication 9, dans lequel le mécanisme de préhension (300) comprend en outre une partie de boîtier fixe (301) et une partie de boîtier mobile (302), dans lequel la partie de boîtier fixe (301) est conçue pour être fixée à un cylindre (403) du pistolet à souder (400) et dans lequel la partie de boîtier mobile (302) est reliée au bras de levier déclencheur (320) de sorte que la partie de boîtier mobile (302) soit déplacée le long d'un axe de cylindre (404) du cylindre (403) lorsque le bras de levier déclencheur (320) est incliné de sa position de départ à sa position de fin.

11. Système pour souder comprenant un empilement (100) selon l'une quelconque des revendications 3 ou 4, un pistolet à souder (400), un magasin (200) selon la revendication 5 et un mécanisme de préhension (300) selon l'une quelconque des revendications 6-10,
**caractérisé en ce que** le mécanisme de préhension (300) est conçu pour alimenter en goujons de soudage (10), agencés en un empilement de goujons de soudage (100), le magasin (200) d'une position de préhension agencée au niveau d'une interface entre le mécanisme de préhension (300) et le magasin (200) à une position de soudage au niveau d'une électrode de soudage (401) du pistolet à souder (400).

12. Procédé d'alimentation en goujons de soudage (10), avec un mécanisme de préhension (300), d'un magasin (200) à une électrode de soudage (401) d'un pistolet à souder (400), dans lequel le goujon de soudage (10) comprend une partie de clou (12) fixée à une partie de feuille (11), ladite partie de feuille (11) comprenant deux bords de guidage sensiblement parallèles (15) et une encoche (14) s'étendant depuis un bord latéral (18) de la partie de feuille (11) dans une direction vers la partie de clou (12), dans lequel le mécanisme de préhension (300) peut être fixé au pistolet à souder (400) en lien avec l'électrode de soudage (401), et dans lequel le magasin (200) peut être fixé au mécanisme de préhension (300), dans lequel le mécanisme de préhension (300) comprend deux ensembles de bras de levier de préhension reliés entre eux (310) mobiles entre une position de préhension et une position de distribution,
**caractérisé en ce que** le procédé comprend les étapes de :
déplacement du goujon de soudage (10) d'une position de préhension dans le magasin (200) à une position de soudage au niveau de l'électrode de soudage (401) avec chacun des bras de levier de préhension (310), dans lequel chacun des bras de levier de préhension (310) présente une partie de préhension (312) comprenant une portion d'alimentation (314) pour recevoir la partie de clou (12) du goujon de soudage (10) pour alimenter en du goujon de soudage (10) de la position de préhension à la position de soudage, et dans lequel la partie de préhension (312) comprend une portion de récupération (313) agencée avec une surface de glissement (315) ; et de
déplacement des bras de levier de préhension (310) avec la surface de glissement (315) dans une direction sensiblement perpendiculaire à la direction du déplacement entre la position de distribution et la position de préhension lorsque la surface de glissement (315) est en contact avec un premier goujon de soudage (10_1) dans le magasin (200) lorsque les bras de levier de préhension (310) se déplacent entre la position de distribution et la position de préhension pour prendre le premier goujon de soudage (10_1), dans lequel la partie de préhension (312) est configurée de sorte que la surface de glissement (315) relie le premier goujon de soudage (10_1) à la portion d'alimentation (314) en une position prédéterminée des bras de levier de préhension (310) de sorte que le premier goujon de soudage (10_1) vienne en prise avec la portion d'alimentation (314) dans la position de préhension.
